# FASCICULE DE BREVET EUROPEEN

(11) **EP 1 893 356 B1**
(45) Date de publication et mention de la délivrance du brevet: **22.06.2011**
(21) Numéro de dépôt: 06753395.0
(22) Date de dépôt: 19.04.2006
(51) Int. Cl.: B08B 3/02, B08B 11/02

(54) **BUSE DE PULVERISATION D ' UN LIQUIDE A HAUTE PRESSION POUR UNE MACHINE DE NETTOYAGE DE VERRES OPHTALMIQUES OU AUTRES SUBSTRATS**
HOCHDRUCK-FLÜSSIGKEITSZERSTÄUBUNGSDÜSE FÜR EINE MASCHINE ZUR REINIGUNG OPTISCHER LINSEN ODER ANDERER SUBSTRATE
HIGH-PRESSURE LIQUID ATOMISATION NOZZLE FOR A MACHINE FOR CLEANING OPTICAL LENSES OR OTHER SUBSTRATES

(30) Priorité: 19.04.2005 EP 05008558
(43) Date de publication de la demande: 05.03.2008
(73) Titulaire: Special Coating Laboratory International, 74160 Archamps (FR)
(72) Inventeur: GHERIG, Jean, F-74580 Viry (FR); GHERIG, Denis, F-74160 Saint Julien en Genevois (FR)
(74) Mandataire: Verriest, Philippe
(86) Numéro de dépôt international: PCT/EP2006/003575
(87) Numéro de publication internationale: WO 2006/111363

(56) Documents cités:
- FR-A- 2 036 509
- FR-A- 2 690 635
- GB-A- 2 062 452
- US-A- 4 784 167

## Description

Les buses de pulvérisation utilisées dans les machines actuelles pour le nettoyage de verres ophtalmiques permettent l'application sur la surface du verre, par contact sur cette dernière, d'un jet de liquide de lavage à haute pression sous une forme plane et sont constituées généralement d'un corps cylindrique dans chacune des faces planes duquel sont pratiquées respectivement un orifice d'entrée du liquide de lavage à haute pression et un orifice de sortie pour la projection du jet de liquide, lesdits orifices étant reliés entre eux par un canal.

Un autre type de buse de pulvérisation est décrit dans JP-62074512.

Toutefois les buses de pulvérisation actuelles ne permettent pas d'obtenir un résultat efficace. En effet les canaux qui sont pratiqués dans les buses génèrent des effets du type « venturi » qui créent des bulles d'air dont la présence dans le jet de liquide projeté à la sortie des buses de pulvérisation ne permet pas à toute la surface du verre touchée par ledit jet d'être en contact avec le liquide ce qui a pour effet de laisser à la surface des verres des espaces non nettoyées.

Pour palier à ce problème, une solution est de programmer plusieurs passages du jet de liquide de lavage sur la surface du verre à nettoyer mais cela diminue d'autant la productivité de la machine de nettoyage.

La présente invention a pour but de remédier à ces inconvénients en proposant une buse de pulvérisation de liquide à haute pression pour le nettoyage notamment des surfaces de verres ou autres pièces similaires permettant d'obtenir en sortie de la buse une lame de liquide haute pression sans bulles d'air permettant à toute la surface du verre touchée par la lame d'être en contact avec le liquide pour un résultat plus efficace qu'avec les buses actuelles et une meilleure productivité.

La buse de pulvérisation selon la présente invention est définie dans la revendication 1.

Les canaux de buses de pulvérisation définis dans les revendications 1 et 2 sont utilisés dans une rampe de pulvérisation selon la revendication 3.

Les avantages et les caractéristiques de la présente invention ressortiront plus clairement de la description qui suit et qui se rapporte au dessin annexé, lequel en représente un mode de réalisation non limitatif.
- la figure 1 représente une vue en perspective du canal reliant l'orifice d'entrée et l'orifice de sortie d'une buse de pulvérisation selon la présente invention
- la figure 2 représente une vue en perspective d'une rampe de pulvérisation d'une machine de nettoyage de verres ophtalmiques intégrant une buse de pulvérisation selon la présente invention

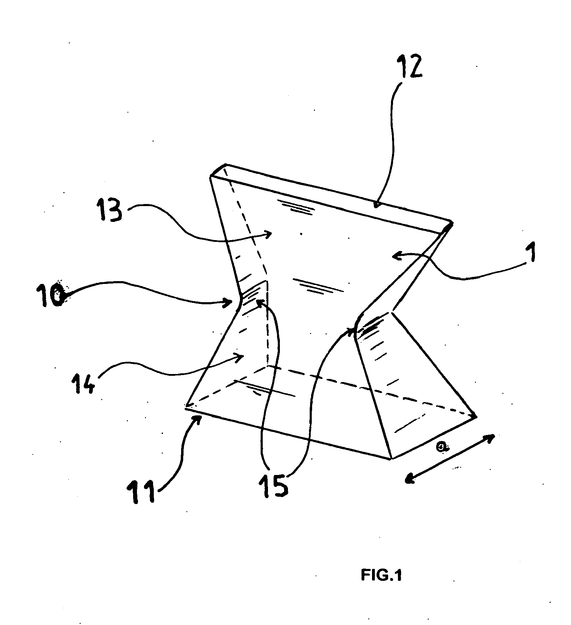

Si on se réfère à la figure 1 on peut voir qu'une buse de pulvérisation selon la présente invention comprend d'une part un canal 1 de section rectangulaire traversant un corps de buse non représenté et présentant un rétrécissement 10, situé sensiblement au niveau de axe médian, lui conférant dans un mode de réalisation préférentiel un profil en forme de X. Chaque extrémité du X forme respectivement l'orifice d'entrée 11 et l'orifice de sortie 12 du canal 1 de la buse de pulvérisation, l'orifice de sortie 12 étant ménagé dans le corps de buse de manière que son ouverture soit beaucoup plus longue que large pour former une fente de pulvérisation permettant de projeter un jet de liquide en forme de lame mince. L'orifice d'entrée 11 est destiné à être raccordé à une chambre de distribution pour l'alimentation du canal de pulvérisation de la buse en liquide de lavage à haute pression et présente la forme d'une fenêtre dont la largeur est supérieure à celle de l'orifice de sortie 12 en forme de fente. Les côtés de plus grande longueur de l'orifice d'entrée 11 sont parallèles aux côtés de plus grande longueur de l'orifice de sortie 12.

La largeur (a) du canal 1, pouvant également être considérée comme son épaisseur, va progressivement en diminuant depuis l'orifice d'entrée 11 jusqu'à l'orifice de sortie 12.

Le canal 1 est constitué, en aval de son rétrécissement 10, d'une cavité de sortie 13 en forme de V et d'autre part, en amont du rétrécissement, d'une cavité d'entrée 14 en tronc de cône dont la base rectangulaire forme l'orifice d'entrée 11.

La cavité de sortie 13 a pour fonction de permettre la projection par la fente 12 d'un jet de liquide en forme de lame mince et évasée tandis que la cavité d'entrée 14 située en amont de la cavité de sortie 13 a pour fonction de permettre l'introduction du liquide de lavage à haute pression dans le canal 10 de la buse avec une résistance minimum sans cavitation c'est-à-dire maintenant une pression dans le liquide de lavage inférieure à sa tension de vapeur empêchant la formation de bulles d'air dans ledit liquide lors de son entrée dans la cavité de sortie 13. La paroi interne 15 du rétrécissement 10 assurant la jonction entre la cavité d'entrée 11 et la cavité de sortie 12 est arrondie vers l'intérieur du canal 10 permettant de maintenir le liquide au contact de la paroi interne du canal 10 lors de son passage de la cavité d'entrée 11 à la cavité de sortie 12 pour empêcher toute formation de bulles d'air.

Le jet de liquide projeté à la sortie de la buse par l'orifice de sortie 12 présente ainsi une forme de lame évasée sans effet venturi et sans bulles d'air permettant de nettoyer la surface des verres ophtalmiques avec une grande efficacité sans laisser d'éléments de surface non nettoyés.

De nombreux essais ont montré qu'une superficie de l'orifice d'entrée 11 six fois supérieure à celle de l'orifice de sortie 12 et une pression du liquide comprise ente 8 et 20 bars permettaient d'obtenir en sortie de buse avec une épaisseur du canal comprise entre 0,15 et 0,30mm une lame liquide sans bulles d'air avec une vitesse supérieure ou égale à 200 km/H en régime laminaire.

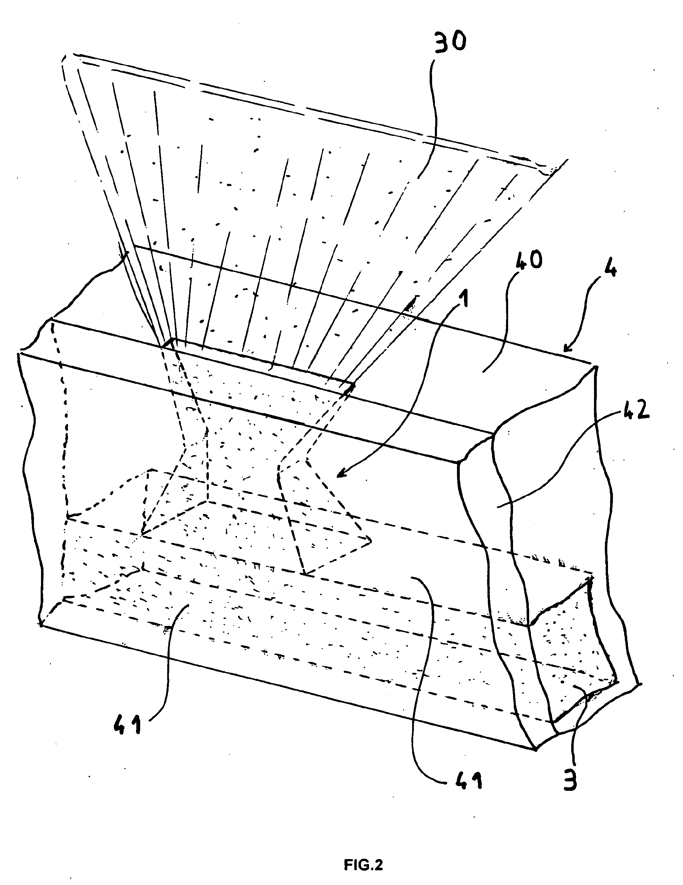

Si on se réfère à la figure 2 on peut voir une buse selon la présente invention intégrée dans une rampe de distribution 4 comportant un corps de rampe 40 dans l'une des faces longitudinales duquel sont pratiqués à intervalles réguliers des canaux 10 en forme de X selon la présente invention, un seul est représenté sur la figure, et une chambre de distribution 41 contenant un liquide de nettoyage 3 haute pression alimentant chaque canal 10 par son orifice d'entrée 11 rectangulaire et débouchant dans la chambre 41, lequel liquide 3 est projeté à vitesse élevée sous la forme d'une lame évasée 30 sans bulles d'air. On peut voir également qu'un couvercle de rampe 42 recouvre la face longitudinale de la rampe 40 dans laquelle sont pratiqués les canaux de pulvérisation 10 selon la présente invention. L'intervalle entre les canaux 10 de chaque buse de pulvérisation sera déterminé de manière que les lames de liquide 30 projetées à la sortie 12 des buses de pulvérisation puissent se chevaucher pour obtenir une seule lame de liquide de dimensions égales ou supérieur au diamètre du verre à nettoyer par le contact de la lame résultante à la surface du verre.

## Revendications

1. Buse de pulvérisation d'un liquide de lavage à haute pression destinée à être utilisée dans une machine de nettoyage pour verres ophtalmiques ou autres substrats comprenant un orifice d'entrée (11) du liquide de lavage et un orifice de sortie (12) du liquide en jet reliés par un canal (1) **caractérisé en ce que** ledit canal (1) possède une section transversale rectangulaire dont la longueur varie de façon à ce que le canal présente, sensiblement à sa partie médiane, un rétrécissement (10) conférant audit canal un profil en X de manière à former d'une part, en aval dudit rétrécissement, une cavité de sortie (13) évasée se terminant par une fente formant l'orifice de sortie (12) et d'autre part, en amont dudit rétrécissement, une cavité d'entrée (14) en tronc de cône dont la base rectangulaire forme l'orifice d'entrée (11) dudit canal (1), la paroi interne (15) du rétrécissement (10) assurant la jonction entre la cavité d'entrée (11) et la cavité de sortie (12) étant arrondie vers l'intérieur du canal (10).

2. Buse de pulvérisation selon la revendication 1 **caractérisée en ce que** la largeur (a) de la section rectangulaire du canal (1) va en augmentant progressivement depuis l'orifice de sortie (12) jusqu'à l'orifice d'entrée (II) du canal (1).

3. Utilisation de canaux (10) de buses de pulvérisation selon l'une quelconque des revendications précédentes dans une rampe de pulvérisation (4) **caractérisée en ce que** ladite rampe (4) comporte un corps de rampe (40) dans lequel sont pratiqués à intervalles réguliers des canaux (10) et une chambre de distribution (41) contenant un liquide de nettoyage (3) à haute pression alimentant chaque canal (10) par son orifice d'entrée (11), lequel liquide (3) est projeté à vitesse élevée sous la forme d'une lame évasée (30) et **en ce que** l'intervalle entre les canaux de pulvérisation (10) est déterminé de manière que les lames de liquide (30) projetées à la sortie (12) de chaque canal de pulvérisation (10) se chevauchent pour obtenir une seule lame de liquide de largeur égale ou supérieure au diamètre de la surface du verre à nettoyer par le contact de la lame de liquide résultante à la surface du verre.

## Claims

1. A nozzle for spraying a washing liquid at high pressure, for use in a cleaning machine for ophthalmic lenses or other substrates, comprising an inlet orifice (11) of the washing liquid and an outlet orifice (12) of the liquid as a jet, connected by a channel (1), **characterized in that** said channel (1) has a rectangular cross-section the length of which varies so that the channel has substantially in the middle part thereof a contraction (10) giving said channel an X-shaped profile so as to form on the one hand, downstream of said contraction, a flared outlet cavity (13) ending in a slot forming the outlet orifice (12), and on the other hand, upstream of said contraction, a truncated inlet cavity (14) with the rectangular base thereof forming the inlet orifice (11) of said channel (1), the internal wall (15) of the contraction (10) providing the junction between the inlet cavity (11) and the outlet cavity (12) being rounded toward the inside of the channel (10).

2. The spraying nozzle according to claim 1, **characterized in that** the width (a) of the rectangular section of the channel (1) progressively increases from the outlet orifice (12) to the inlet orifice (11) of the channel (1).

3. Use of channels (10) of spraying nozzles according to any of the preceding claims in a spraying ramp (4), **characterized in that** said ramp (4) comprises a ramp body (40), in which channels (10) are made at regular intervals, and a distribution chamber (41) containing a high pressure cleaning liquid (3) feeding each channel (10) via the inlet orifice (11) thereof, which liquid (3) is projected at high speed as a flared curtain (30), and that the interval between the spraying channels (10) is determined so that the liquid curtains (30) projected at the outlet (12) of each spraying channel (10) overlap so as to obtain a single liquid curtain having a width equal or greater than the diameter of the surface of the lens to be cleaned by contact with the resulting liquid curtain at the surface of the lens.

## Patentansprüche

1. Düse zum Sprühen einer Waschflüssigkeit auf Hochdruck, die dazu gedacht ist, in einer Reinigungsmaschine für ophthalmische Gläser oder anderen Substraten verwendet zu werden, umfassend eine Einlassöffnung (11) der Waschflüssigkeit und eine Auslassöffnung (12) der Flüssigkeit als Strahl, die über einen Kanal (1) verbunden sind, **dadurch gekennzeichnet, dass** der Kanal (1) einen rechteckigen Querschnitt aufweist, dessen Länge derart variiert, dass der Kanal im Wesentlichen in seinem mittleren Teil eine Verengung (10) aufweist, die dem Kanal ein X-Profil verleiht, um einerseits unterhalb der Verengung einen aufgeweiteten Auslasshohlraum (13) zu bilden, der in einem Schlitz endet, der die Auslassöffnung (12) bildet, und andererseits oberhalb der Verengung einen kegelstumpfförmigen Einlasshohlraum (14) zu bilden, dessen rechteckige Basis die Einlassöffnung (11) des Kanals (1) bildet, wobei die Innenwand (15) der Verengung (10) den Zusammenschluss zwischen dem Einlasshohlraum (11) und dem Auslasshohlraum (12) sicherstellt, der zum Innern des Kanals (10) hin abgerundet ist.

2. Sprühdüse nach Anspruch 1, **dadurch gekennzeichnet, dass** die Breite (a) des rechteckigen Querschnitts des Kanals (1) von der Auslassöffnung (12) zu der Einlassöffnung (11) des Kanals (1) allmählich zunimmt.

3. Verwendung von Kanälen (10) von Sprühdüsen nach einem der vorhergehenden Ansprüche in einer Sprührampe (4), **dadurch gekennzeichnet, dass** die Rampe (4) einen Rampenkörper (40), in dem in regelmäßigen Abständen Kanäle (10) angebracht sind, und eine Verteilerkammer (41), die eine Hochdruck-Reinigungsflüssigkeit (3) enthält, die jeden Kanal (10) durch seine Einlassöffnung (11) speist, umfasst, wobei die Flüssigkeit (3) auf hoher Geschwindigkeit wie ein erweiterter Vorhang (30) projiziert wird, und dass das Intervall zwischen den Sprühkanälen (10) derart bestimmt ist, dass die flüssigen Vorhänge (30), die am Auslass (12) jedes Sprühkanals (10) verspritzt werden, sich überlagern, um einen einzigen flüssigen Vorhang zu erzielen, der eine Breite aufweist, die gleich oder größer als der Durchmesser der Oberfläche des Glases ist, das durch Kontakt mit dem sich an der Oberfläche der Glases ergebenden flüssigen Vorhang zu reinigen ist.
